# EUROPÄISCHE PATENTSCHRIFT

(11) **EP 2 176 060 B1**
(45) Veröffentlichungstag und Bekanntmachung des Hinweises auf die Patenterteilung: **09.12.2015**
(21) Anmeldenummer: 08785054.1
(22) Anmeldetag: 25.07.2008
(51) Int. Cl.: B29D 11/00, B29C 35/06, B29C 35/04

(54) **VERFAHREN SOWIE VORRICHTUNG ZUM HERSTELLEN EINER ELASTOMEREN LICHTLEITFASER**
PROCESS AND APPARATUS FOR THE PRODUCTION OF AN ELASTOMERIC OPTICAL CONDUCTOR FIBRE
PROCÉDÉ ET DISPOSITIF DE FABRICATION D'UNE FIBRE OPTIQUE ÉLASTOMÈRE

(30) Priorität: 28.07.2007 DE 102007035419
(43) Veröffentlichungstag der Anmeldung: 21.04.2010
(73) Patentinhaber: LEONI Bordnetz-Systeme GmbH, 90402 Nürnberg (DE)
(72) Erfinder: REICHINGER, Gerhard, 91126 Rednitzhembach (DE); STREIT, Simone, 91126 Schwabach (DE); STALLWITZ, Markus, 91126 Rednitzhembach (DE); SCHIPKE, Stefan, 90574 Rosstal-Grossweissmannsdorf (DE)
(74) Vertreter: FDST Patentanwälte
(86) Internationale Anmeldenummer: PCT/EP2008/006101
(87) Internationale Veröffentlichungsnummer: WO 2009/015825

(56) Entgegenhaltungen:
- EP-A- 0 066 659
- DE-C2- 3 844 604
- GB-A- 2 155 357
- JP-A- 1 224 701
- US-A- 4 125 644
- US-A- 4 937 029
- US-A1- 2005 058 420

## Beschreibung

Die Erfindung betrifft ein Verfahren gemäß Anspruch 1 sowie eine Vorrichtung gemäß Anspruch 12 zum Herstellen einer elastomeren Lichtleitfaser aus Kunstsoff, wobei aus einem zähflüssige reaktiven Äusgangsstoff eine Faser gebildet und der Ausgangsstoff vernetzt wird.

Eine derartige Lichtleitfaser ist beispielsweise aus der DE 101 45 945 A1 zu entnehmen. Die darin beschriebene Lichtleitfaser besteht aus einem lichtführenden Kern aus einem vernetzten Polysiloxan, der von einem Mantel umgeben ist. Als Vorteil gegenüber den bisherigen üblicherweise eingesetzten Lichtleitfasern aus Plastik (POF, Plastic Optical Fiber) wird die deutlich verbesserte Temperaturbeständigkeit, eine gute Dehnbarkeit, eine geringere Neigung zu Spannungsrissen sowie eine hohe Chemikalienbeständigkeit angeführt. Als besonderes Einsatzgebiet wird für eine derartige Lichtleitfaser insbesondere der Automobilbereich angegeben.

Es hat sich jedoch gezeigt, dass die Herstellung einer derartigen elastomeren Lichtleitfaser mit guten optischen sowie mechanischen Eigenschaften aufwändig bzw. kostenintensiv ist.

Aus der JP-A-01224701 ist ein Verfahren zur Herstellung einer elastomeren Lichtleitfaser aus Kunststoff zu entnehmen, bei dem ein Kunststoff in ein mit Flüssigkeit gefülltes Bad extrudiert und im Bad vernetzt wird.

Aus der US-A-2005/058420 ist ein weiteres Verfahren zur Herstellung einer Lichtleitfaser zu entnehmen, bei dem eine optische Faser in einem mit einer speziellen Lösung angefüllten Behälter eingetaucht und anschließend beispielsweise mit Laserlicht bestrahlt wird um einen Faserkern auszubilden.

Bei einem aus der DE-C-38 44 604 bekannten Verfahren ist vorgesehen, durch eine Düse zunächst ein Kernmaterial zu extrudieren und auf dieses ein Beschichtungsmaterial aufzubringen, anschließend das Kernmaterial und das Beschichtungsmaterial auszuhärten und schließlich ein Umhüllungsmaterial aufzubringen und auszuhärten.

Ein weiteres Verfahren ist schließlich aus der GB-A-2 155 357 zu entnehmen, bei dem eine optische Faser durch eine Bestrahlungszone geführt wird, um die Eigenschaften einer Beschichtung auf der optischen Faser zu modulieren.

Der Erfindung liegt daher die Aufgabe zugrunde, ein Verfahren sowie eine Vorrichtung anzugeben, mit denen eine elastomere Lichtleiterfaser in gleichbleibend guter Qualität kostengünstig herstellbar ist.

Die auf das Verfahren bezogene Aufgabe wird erfindungsgemäß gelöst durch ein Verfahren zum Herstellen einer elastomeren Lichtleitfaser aus Kunststoff mit den Merkmalen des Anspruchs 1. Bei dem Verfahren wird aus einem zähflüssigen reaktiven Ausgangsstoff eine Faser gezogen und der Ausgangsstoff vernetzt, wobei der Ausgangsstoff über eine Düse in eine Reaktionsvorrichtung gegeben wird, die mit einer gegenüber dem Ausgangsstoff inerten Flüssigkeit gefüllt ist und wobei in der Reaktionsvorrichtung zumindest eine teilweise Vernetzung des Ausgangsstoffs erfolgt. Alternativ oder ergänzend zur Vernetzung in der Reaktionsvorrichtung erfolgt die Vernetzung mit Hilfe von Laserlicht, wobei dieses in der Düse in Längsrichtung in den Ausgangsstoff eingeleitet wird, so dass dieser vernetzt. Bei dieser Herstellungsvariante ist die Anordnung einer mit Flüssigkeit gefüllten Reaktionsvorrichtung nicht erforderlich. Aufgrund der vergleichsweise hohen eingebrachten Energie erfolgt nämlich eine sehr zügige Vernetzungsreaktion, so dass sehr schnell die vollständig vernetzte Lichtleitfaser ausgebildet ist. Von besonderer Bedeutung ist hierbei, dass der Lichtwellenleiter für die Einbringung des Laserlichts innerhalb der Düse angeordnet ist, so dass das Laserlicht quasi koaxial am Düsenaustritt in den zähflüssigen Ausgangswerkstoff eingekoppelt wird. Die Vernetzung beginnt daher unmittelbar am Düsenaustritt, jedoch noch nicht davor. Die beiden Herstellungsvarianten können auch miteinander kombiniert werden, so kann beispielsweise die Vernetzungsreaktion bei der ersten Variante durch Bestrahlung beschleunigt werden.

Der reaktive Ausgangsstoff ist durch mehrere reaktive Ausgangskomponenten zusammengesetzt, die in einer Dosiervorrichtung miteinander in vorgegebener Zusammensetzung vermischt werden. Die Düse bildet hierbei einen Teil der Dosiervorrichtung. Um den Beginn der Vernetzungsreaktion innerhalb der Dosiervorrichtung und im Bereich der Düse möglichst zu vermeiden ist eine Temperierung, also Kühlung der Dosiervorrichtung und insbesondere der Düse vorgesehen.

Der reaktive Ausgangsstoff wird vorzugsweise gekühlt auf eine Temperatur unter Raumtemperatur und insbesondere auf eine Temperatur < 0°.

Nach ihrem Austritt der zähflüssigen Ausgangsmasse aus der Düse wird vorzugsweise die Gravitationskraft ausgenutzt, so dass die Ausgangsmasse sich aufgrund ihres Eigengewichts in der Reaktionsvorrichtung nach unten bewegt. Aufgrund ihrer zähflüssigen Konsistenz bildet sich hierbei ein kontinuierlicher langgestreckter Faden aus. Von besonderer Bedeutung ist die die Faser umgebende Flüssigkeit, die ein kontrolliertes und gleichmäßiges Herstellen der Faser ermöglicht. Als Flüssigkeit wird hierbei vorzugsweise ein Öl herangezogen, welches insbesondere eine kleinere Dichte als die zähflüssige Ausgangsmasse aufweist. Durch die Flüssigkeit wird daher die zähflüssige Masse quasi gebremst, so dass sich eine geeignete Fallgeschwindigkeit einstellt. Diese geringe Fallgeschwindigkeit schafft bei einer praktikablen Fallhöhe beispielsweise im Bereich von wenigen Metern eine ausreichende Zeit, um die Vernetzungsreaktion zu aktivieren, so dass am Ende der Reaktionsvorrichtung bereits eine teilvernetzte Faser vorliegt, die für die Weiterverarbeitung mechanisch beansprucht werden kann, bis die Faser letztendlich fertig als Lichtleitfaser ausgebildet ist und vorzugsweise vollständig vernetzt ist. Am Ende ist die elastomere Lichtleitfaser ausgebildet. Unter Elastomer wird hier eine Gummielastizität verstanden. Die Bruchdehnung liegt hierbei vorzugsweise über 100% bezogen auf den ungedehnten Zustand bei Raumtemperatur. Diese Gummielastizität wird durch die Vernetzung wesentlich bestimmt. Dabei handelt es sich um eine räumliche chemische Vernetzung. Die Vernetzung der einzelnen Polymerketten ist hierbei vergleichsweise weitmaschig, so dass der Werkstoff oberhalb seines Glaspunktes die gewünschte Elastizität aufweist und nicht spröde ist. Ein besonderer Vorteil dieser elastomeren Lichtleitfaser ist in dem hohen Temperatureinsatzbereich zu sehen, so dass sich derartige Lichtleitfasern auch in thermisch beanspruchter Umgebung, beispielsweise in ein Kraftfahrzeug, einsetzen lässt.

Die elastomere Lichtleitfaser wird insbesondere ohne eine die Faser umgebende Reflexions- oder Cladding-Schicht ausgebildet und für Anwendungen eingesetzt, die den evanescenten Effekt ausnutzen, wie dies beispielsweise bei einem aus der WO 03/069294 A1 zu entnehmenden Drucksensor vorgesehen ist. Bei diesem Drucksensor wird die claddingfreie Lichtleitfaser, also eine Faser ohne Mantel bzw. Außenbeschichtung, insbesondere lose in einem umgebenden Schlauchmantel geführt. Bei einer Druckeinwirkung wird der Mantel gegen die Lichtleitfaser gedrückt, so dass sich die in der Lichtleitfaser ausbreitenden Lichtwellen gestört werden. Dies wird als Drucksignal detektiert. Ein derartiger Drucksensor eignet sich beispielsweise als Einklemmschutz bei motorisch verstellbaren Schließmechanismen wie Fenstern oder Türen.

Unter zähflüssig wird hierbei eine Viskosität insbesondere zwischen 500 und 50.000 mPas bei Raumtemperatur verstanden. Der reaktive Ausgangsstoff ist daher mittel- bis hochviskos.

Um die Vernetzungsreaktion in Gang zu setzen ist die Flüssigkeit in der Reaktionsvorrichtung zweckdienlicherweise temperiert, beispielsweise auf eine erhöhte Temperatur im Bereich zwischen 40° und 60°C. Die Flüssigkeit wird innerhalb der Reaktionsvorrichtung vorzugsweise auf eine im Wesentlichen gleich bleibende Füllstandshöhe geregelt.

Im Hinblick auf das angestrebte kontinuierliche Herstellungsverfahren erfolgt innerhalb der Reaktionsvorrichtung lediglich eine Teilvernetzung derart, dass sich die Faser mechanisch beispielsweise durch Ziehen, etc. weiter verarbeiten lässt. Bevor die teilvernetzte Faser sich mechanisch beanspruchen lässt erreicht diese über die Düse vorgeformte Faser innerhalb der Reaktionsvorrichtung in einem definierten räumlichen Fenster einen gelartigen Zustand. In diesem Zustand kann die Faser geometrisch beeinflusst werden. Dies wird nunmehr vorteilhafterweise dahingehend ausgenutzt, dass die Faser in diesem Fenster in ihre gewünschte Endform insbesondere durch Ziehen gebracht wird. Durch Einstellen der Ziehgeschwindigkeit und/oder der Austrittsrate des Ausgangsstoffs aus der Düse wird - vorzugsweise ohne weitere mechanischen oder sonstige formgebende Maßnahmen - die Faser auf den gewünschten Enddurchmesser gezogen.

Zweckdienlicherweise ist eine Blende vorgesehen, durch die die Faser im Endbereich der Reaktionsvorrichtung gezogen wird, um ein Auslaufen der Flüssigkeit zu vermeiden. Die Blende umgibt die Faser nach Art einer eng anliegenden Manschette. Vorteilhafterweise ist hierbei die Blende dynamisch einstellbar. Durch die dynamische Einstellmöglichkeit wird insbesondere die Schließkraft, mit der sich die Blende an die Faser anlegt, eingestellt. Die Blende ist hierzu zweckdienlichereweise als ein elastisch verformbarer Schlauch ausgebildet, der von außen mit Druck beaufschlagbar ist.

Nach der Blende wird die mechanisch bereits belastbare Faser durch eine Bandziehvorrichtung abgezogen und weitertransportiert. Hierzu wird sie von zwei sich gegenläufig drehenden Bändern mit glatter Oberfläche gegriffen und weitergezogen. Von besonderer Bedeutung ist hierbei ein möglichst schonendes Greifen der Faser, um eine Beschädigung der Oberfläche und damit eine Beeinträchtigung der optischen Eigenschaften möglichst zu vermeiden. Vorzugsweise ist nach der Blende die Faser noch mit der Flüssigkeit benetzt und daher quasi mit einem Schutzfilm umgeben.

Schließlich wird die teilvernetzte Faser noch mehreren Nachbearbeitungsstufen bzw. einem Reifeprozess unterzogen. Hierzu wird die Faser insbesondere nachvernetzt, von der Rest-Flüssigkeit gereinigt und schließlich aufgewickelt und insbesondere auch zur endgültigen Vernetzung gelagert. Hierzu ist in zweckdienlichen Ausgestaltungen vorgesehen, dass die Faser zur weiteren Vernetzung durch ein beheiztes Bad gezogen wird. Alternativ kann zur Nachvemetzung auch eine Bestrahlung, etc. vorgesehen sein. Zum Reinigen von der Flüssigkeit wird die Faser wiederum durch eine vorzugsweise beheizte Reinigungseinrichtung gezogen, in der die Faser mit Reinigungsflüssigkeit behandelt wird. Die Reinigungseinrichtung umfasst hierbei mehrere Stufen, insbesondere eine erste Stufe, in der eine alkalische Reinigungsflüssigkeit eingesetzt wird und eine zweite Reinigungsstufe, in der mit Wasser gereinigt wird. In der Reinigungseinrichtung strömt die Reinigungsflüssigkeit vorzugsweise über die Faser und wird insbesondere kontinuierlich umgewälzt. Die Faser wird daher mit der Flüssigkeit umspült. Zur Erhöhung der Reinigungswirkung geschieht dies vorzugsweise ergänzend unter Einwirkung von Ultraschall. Im Nachgang zu der Reinigungsstufe erfolgt die Trocknung, die insbesondere bei Unterdruck (Vakuum) erfolgt. Schließlich wird die dann vorzugsweise als Meter- oder Endlosware aufgerollte Faser insbesondere unter Schutzatmosphäre gelagert, bis sie vollständig vernetzt ist. Dies wird als Reifeprozess bezeichnet, während dessen auch eine weitere Trocknung vorgesehen sein kann. Durch den Reifeprozess ist ein wirtschaftlich effizientes kontinuierliches Herstellungsverfahren gegeben.

Die hier beschriebene Vorgehensweise eignet sich besonders für eine kontinuierliche, kostengünstige Fertigung von elastomeren Lichtleiterfasern auch im großtechnischen Betrieb. Durch die einzelnen Schritte ist zum einen die Ausbildung einer qualitativ hochwertigen Lichtleitfaser gleichzeitig bei ökonomischer Herstellweise gewährleistet. Insbesondere die verschiedenen Behandlungen der Faser zu den unterschiedlichen Vernetzungsstufen ist prozesstechnisch sowohl sehr einfach und reproduzierbar als auch effizient, da beispielsweise der nachgelagerte Reifeprozess die Möglichkeit eröffnet, eine vergleichsweise hohe Ziehgeschwindigkeit einzustellen, da die vollständige Vernetzung in den Reifeprozess nachgelagert wird.

Die beschriebenen Verfahren eignen sich zum Herstellen von elastomeren Lichtleitfasern aus unterschiedlichen reaktiven Ausgangsstoffen. Untersuchungen haben jedoch ergeben, dass sich die beschriebenen Verfahren für eine kostengünstige Herstellung von elastomeren Lichtleitfasern mit einer geforderten hohen Qualität dann erhalten lassen, wenn als Ausgangsstoff ein reaktives, räumlich vernetzbares Polyurethan-System herangezogen wird. Eine derartige elastomere PU-Faser lässt sich prozesstechnisch einfach herstellen und weist gute optische Eigenschaften auf. Das Polyurethan-System kann hierbei ein Einkomponenten- oder auch ein Zweikomponenten-System sein.

Die Vernetzungsreaktion ist hierbei zweckdienlicherweise eine Polyadditionsreaktion zweier funktioneller Gruppen. Ein besonderer Vorteil der Polyadditionsreaktion ist darin zu sehen, dass keine Spalt- oder Nebenprodukte freigesetzt werden, die beispielsweise die optische Lichtleitung stören könnten. Im Falle eines Zweikomponenten-Polyurethan-Systems umfasst dieses als erste Komponente ein Polyol sowie als zweite Komponente einen Vernetzer (Härter), insbesondere ein Polyisocyanat. Bei diesem System verbinden sich als funktionelle Gruppen eine Hydroxylgruppe (OH) eines Polyols mit einer Isocyanatgruppe (NCO) des (Poly)Isocyanates unter der Bildung einer Urethangruppe. Vorzugsweise wird ein aliphatisches Polyisocyanat eingesetzt, welches gute Eigenschaften im Hinblick auf eine thermooxidative Alterung bei höheren Temperaturen zeigt.

Als Polyol werden vorzugsweise Polyol-Oligomere mit einem vergleichsweise geringen Molekulargewicht (<10.000 Dalton) eingesetzt. Die funktionellen Hydroxylgruppen sind insbesondere endständig, also am Kettenende der Polymerkette und bevorzugt primär aufgrund der gewünschten hohen Reaktivität. Die elastischen Eigenschaften des Polyurethans werden hauptsächlich von der Polyolkomponente beeinflusst. Für die Formulierung/Mischung eines elastischen, dreidimensionalen vernetzten Polyurethans werden daher vorzugsweise Polyole mit zwei oder drei Hydroxylgruppen pro Molekül eingesetzt (zwei- oder dreiwertige Polyole). Durch die Begrenzung auf maximal drei Hydroxylgruppen wird die gewünschte weitmaschige Vernetzung erreicht, die letztendlich für die elastomere Eigenschaft maßgebend ist. Eine größere Anzahl von Hydroxylgruppen führt unter Umständen zu einer zu hohen Vernetzungsdichte, was spröde bis duromere Eigenschaften zur Folge haben kann. Prinzipiell können auch geringe Mengen an höherwertigen oder niederwertigen, kurzkettigen, verzweigten oder linearen Polyolen zugemischt werden, um die Materialeigenschaften geeignet einzustellen. Unter geringen Mengen wird ein Anteil < 25% und bevorzugt < 10% verstanden. Der überwiegende Anteil (> 75%, insbesondere > 90%) der Polyolkomponente setzt sich vorzugsweise aus dreiwertigen Polyolen zusammen.

Die angestrebte dreidimensionale Netzwerkstruktur wird vorzugsweise alternativ oder ergänzend zu der Verwendung von dreiwertigen Polyolen auch durch Polyisocyanate (Härter) mit bis zu drei Isocyanatgruppen, also so genannten dreiwertigen Isocyanaten unterstützt.

Allgemein lassen sich zur Erreichung der gewünschten dreidimensionalen Netzwerkstruktur insbesondere folgende Werkstoffkombinationen einsetzen:
A) verzweigtes Polyisocyanat + lineares Polyol
B) verzweigtes Polyol+ verzweigtes Polyisocyanat
C) lineares Di/ oder Polyisocyanat + verzweigtes Polyol

Lineare Polyole sind bei Raumtemperatur meist wachsartig und sind nur eingeschränkt herstellungstechnisch einsetzbar. Für einen Prozess, der bis nach dem Mischvorgang gekühlt abläuft, sind sie daher weniger geeignet (zu A).

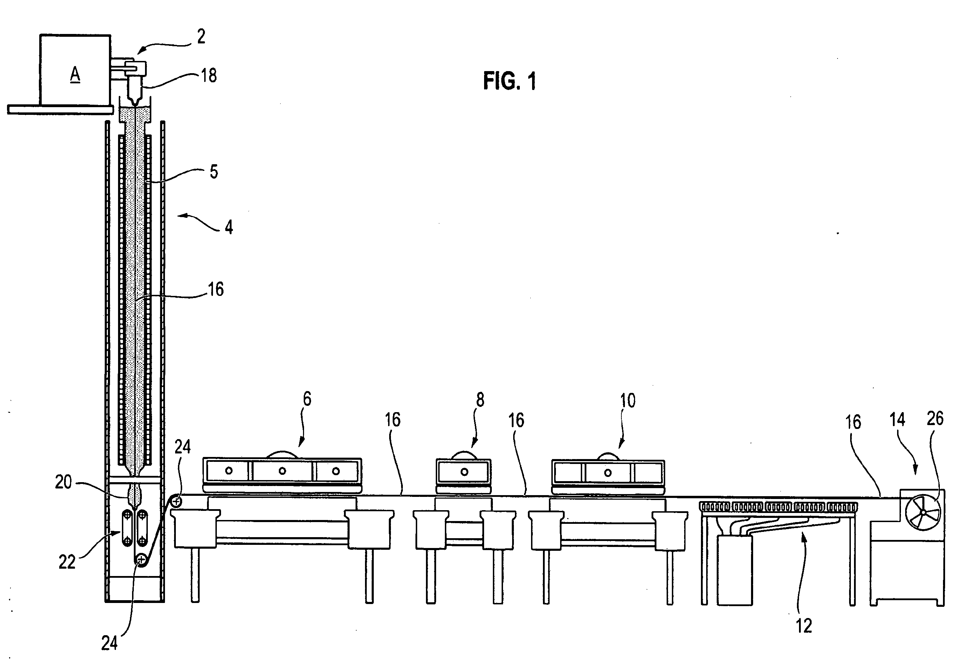

Bei der Kombination B) besteht aufgrund der "Doppelverzweigung" die Gefahr von mehr Vernetzungsfehistellen. Vorzugsweise wird daher etwas mehr Polyisocyanat zugegeben, welches mit Luftfeuchtigkeit nachträglich abbinden kann. Der Vorteil dieser Kombination ist darin zu sehen, dass es verzweigte Polyole mit niederem Molekulargewicht gibt, die bei Raumtemperatur eine mittlere Viskosität (2000 - 4000 mPas) besitzen, also noch zähflüssig sind und auch in dem hier beschriebenen bevorzugten Prozess bei -10°C/-20°C noch förderbar und mischbar sind. Diese Werkstoffkombination wird vorzugsweise bei dem nachfolgend zur Fig. 1 beschriebenen Herstellungsprozess eingesetzt.

Auch bei den Polyisocyanaten gibt es verglichen mit den monomeren Diisocyanaten neben dem arbeitshygienischen Aspekt (monomere Diisocyanate werden üblicherweise als giftig eingestuft) zusätzlich den Gewinn an Funktionalität. Über verschiedene Reaktionsarten werden Diisocyanate in Polyisocyanate übergeführt und verfügen dann über eine für eine räumliche Vernetzung notwendige Funktionalität von größer als zwei (Wertigkeit >2). Vorteil der Polyisocyanate neben der höheren Funktionalität >2 ist die höhere Viskosität (ca. 10 000 mPas, Polyisocyanat auf HDI-Basis), dadurch kann das Polyisocyanat ohne aufwendige Vorbehandlung in dem zur Fig. 1 beschriebenen bevorzugten Prozess direkt verarbeitet werden.

Im Hinblick auf die angestrebte Verwendung als Lichtleitfaser ist zweckdienlicherweise vorgesehen, dass der Ausgangsstoff vollständig vernetzt wird, dass also eine stöchiometrische Vernetzung vorliegt und möglichst keine Fehlstellen ausgebildet sind. Derartige Fehlstellen können sich unter Umständen negativ auf die optischen Eigenschaften auswirken. Auch beeinflussen derartige Fehlstellen in negativer Weise die Alterungsbeständigkeit.

Insbesondere um eine möglichst vollständige Vernetzung zu erzielen wird als Polyol ein Gemisch aus nieder- mit höher molekularen Polyolen eingesetzt. Die niedermolekularen Polylole weisen eine höhere Mobilität auf und können daher nach Art eines Nachvernetzers zunächst ausgebildete Fehlstellen nachvernetzen.

Gemäß einer zweckdienlichen Ausgestaltung werden die Komponenten außerstöchiometrisch gemischt und es wird ein zusätzlicher reaktiver Vernetzer beigefügt. Insbesondere wird beispielsweise die Faseroberfläche nachträglich fluoriert, um beispielsweise eine so genannte Claddingschicht auszubilden.

Zur Beschleunigung der Vernetzungsreaktion wird vorzugsweise ein Katalysator beigemischt, und zwar insbesondere im Bereich von etwa 0,3 Gew.-% bis 1 Gew.-% - bezogen auf den Anteil der Polyol-Komponente. Als Katalysatoren werden insbesondere für Polyurethan-Gießharzsysteme typische Katalysatoren, wie organische oder anorganische Zinnkatalysatoren und andere oder Mischungen von diesen verwendet.

Um den thermooxidativen Abbau möglichst zu verhindern wird bevorzugt ein geeignetes Additiv beigemischt, insbesondere im Bereich von etwa 1 bis 5 Gew.-% - bezogen auf den Anteil der Polyol-Komponente.

Um eine Vernetzung vor der eigentlichen gewünschten Reaktionsphase nach Austritt aus der Düse zu verhindern ist zweckdienlicherweise vorgesehen, dass zumindest eine der funktionellen Gruppen blockiert ist. Hierdurch wird beispielsweise eine Kühlung der Düse hinfällig.

Zweckdienlicherweise wird das molekulare Verhältnis der funktionellen Gruppen NCO : OH im Bereich zwischen 1,3 : 1 und 0,9 : 1 eingestellt. Als besonders geeignet hat sich ein Verhältnis von 1,1 : herausgestellt.

Die Aufgabe im Hinblick auf die Vorrichtung wird erfindungsgemäß gelöst durch eine Vorrichtung zum Herstellen der elastomeren Lichtleitfaser mit den Merkmalen des Anspruchs 12. Die im Hinblick auf das Verfahren angeführten Vorteile und bevorzugten Ausgestaltungen sind sinngemäß auch auf die Vorrichtung zu übertragen.

Die hergestellte Lichtleitfaser besteht aus einem elastomeren Kunststoff, wobei dieser ein dreidimensional vernetztes Polyurethan ist. Auch hier gilt, dass die im Hinblick auf das Verfahren angeführten Vorteile und bevorzugten Ausgestaltungen sinngemäß auch auf die Lichtleitfaser im Hinblick auf ihre chemische Zusammensetzung übertragbar sind.

Es hat sich herausgestellt, dass ein derartiges System auf Polyurethan-Basis (PUR-System) gegenüber anderen Kunststoffsystemen, wie beispielsweise Polysiloxan-Systemen eine deutlich vereinfachte Prozessführung bei der Herstellung erlauben und zudem auch insgesamt bessere Eigenschaften im Hinblick auf die Lichtleitung zeigen.

Im Hinblick auf die Prozessführung ist bei den Systemen auf Polyurethan-Basis besonders hervorzuheben, dass sich die Vernetzungsreaktion derart einstellen lässt, dass sie über einen vergleichsweise großen Zeitraum staftfindet. Dies ermöglicht, prozesstechnisch die Geometrie der Faser in der gewünschten Weise einzustellen. Die oben im Hinblick auf den Anspruch 1 beschriebene Herstellungsvariante mit Hilfe der Reaktionsvorrichtung ist herstellungstechnisch insbesondere auf ein derartiges PUR-System zugeschnitten.

Weiterhin lassen sich die Ausgangskomponenten bei dem PUR-System prozesstechnisch zuverlässig und sicher homogen mischen, um insgesamt gleichbleibende Fasereigenschaften zu erzielen. Bei anderen Kunststoff-Systemen ist hierzu ein deutlich höherer Aufwand erforderlich bzw. aufgrund Mischungsschwierigkeiten können sich höhere Dämpfungswerte in der sich ausbildenden Faser einstellen.

Weiterhin zeichnen sich die PUR-Systeme dadurch aus, dass man die für den Prozess notwendige Viskosität in weiten Bereichen beispielsweise durch eine Vorvernetzung einstellen kann. Hierdurch kann also aktiv auf den Ablauf des Prozesses und damit auf die Eigenschaften der sich ausbildenden Fasern in einfacher Weise eingewirkt werden.

Im Vergleich zu beispielsweise Silikonwerkstoffen lässt sich mit Polyurethan-Systemen auch eine höhere Härte der Fasern einstellen, ohne dass sich deren optische Eigenschaften wesentlich verschlechtern.

Insgesamt ist bei den PUR-Systemen eine hohe Bandbreite an einstellbaren Werkstoffeigenschaften ermöglicht. Die bei den PUR-Systemen üblicherweise verwendeten Ausgangskomponenten, insbesondere Polyole und Polyisocyanate, können nämlich ähnlich wie in einem Baukastensystem in weiten Bereichen miteinander unterschiedlich abgemischt werden, um unterschiedliche Werkstoffeigenschaften zu erzielen. Der besondere Vorteil der PUR-Systeme ist darin zu sehen, dass die optischen Eigenschaften hierbei nur bedingt betroffen sind und es nicht zu einer Materialentmischung oder einer Eintrübung kommt.

Von besonderem Vorteil ist weiterhin die elektrostatische Unempfindlichkeit bei einer Faser auf Basis eines PUR-Systems. Im Unterschied hierzu lädt sich beispielsweise eine Silikonfaser elektrostatisch auf, wodurch Schmutzpartikel angezogen werden, was wiederum dazu führen kann, dass Licht ausgekoppelt wird und die Dämpfung steigt. Vor diesem Hintergrund ist daher die Faser auf Grundlage des PUR-Systems insbesondere geeignet für eine Anwendung unter Ausnutzung des Evanescentfeld-Effektes, bei der die Faser ohne Ummantelung/Cladding ausgebildet ist. Insbesondere besteht nämlich auch die Möglichkeit, die Faser während oder auch nach dem Herstellungsprozess vergleichsweise einfach zu reinigen, um speziell für derartige Evanescentfeld-Anwendungen eine qualitativ hochwertige Faser zur Verfügung zu haben.

Schließlich ist noch die vergleichsweise hohe Brechzahl von 1,55 gegenüber beispielsweise der Brechzahl von 1,375 bei einer Silikonfaser hervorzuheben. Soll die Faser mit einem Mantel/Cladding umgeben sein, welches generell eine kleinere Brechzahl aufweisen muss, so bieten sich bei einer PUR-Faser eine Vielzahl von Materialien für das Cladding an. Demgegenüber wäre bei einer Silikonfaser nur eine sehr eingeschränkte Materialauswahl möglich.

Ausführungsbeispiele der Erfindung werden nachfolgend anhand der Figuren näher erläutert. Es zeigen jeweils in schematischen und vereinfachten Darstellungen:
- Fig. 1: eine Gesamtdarstellung einer Vorrichtung zur Herstellung einer elastomeren Lichtleitfaser,
- Fig. 2: eine Detaildarstellung einer Dosiervorrichtung,
- Fig. 3: eine Detaildarstellung der Vorrichtung gemäß Fig. 1 im Bereich einer vertikalen, mit Öl gefüllten Reaktionsvorrichtung,
- Fig. 4: eine Detaildarstellung einer Blende,
- Fig. 5: eine Detaildarstellung einer Reinigungsvorrichtung,
- Fig. 6: eine Detaildarstellung einer alternativen Vorrichtung zur Herstellung einer Lichtleitfaser mit Hilfe von Laserlicht.

In den Figuren sind gleich wirkende Teile mit den gleichen Bezugszeichen versehen.

Zur Herstellung einer elastomeren, dreidimensionalen Lichtleitfaser aus Kunststoff umfasst die in Fig. 1 dargestellte Vorrichtung oder Anlage eine Dosiervorrichtung 2, einen Ziehturm 4, in dem als Reaktionsvorrichtung ein mit Öl gefüllter, säulenartiger Behälter 5 angeordnet ist, eine Nachvernetzungsvorrichtung 6, eine erste Reinigungseinrichtung 8 und eine zweite Reinigungseinrichtung 10, eine Trocknungsvorrichtung 12 sowie eine Aufwicklungsvorrichtung 14. Die einzelnen Vorrichtungen sind nacheinander angeordnet und werden von einer sich bildenden Faser 16 nacheinander durchlaufen.

In der Dosiervorrichtung 2 erfolgt die Vermischung sowie Dosierung des reaktiven Ausgangsstoffes A, welcher zähflüssig ist und mit Hilfe der Dosiervorrichtung 2 durch eine bevorzugt temperierte Düse 18 der Dosiervorrichtung gepresst wird, so dass sich im Anschluss an die Düse 18 eine kontinuierliche, zähflüssige Faser ausbildet, die aufgrund ihres Eigengewichts innerhalb des Ziehturms 4 nach unten fällt. Hierbei bildet der zähflüssige Ausgangsstoff A aufgrund seiner zähflüssigen Viskosität einen sich selbst ausbildenden, kontinuierlichen, ununterbrochenen Faserstrang. Zur Einstellung der Viskosität des Ausgangsstoffes A wird dieser bzw. dessen einzelne Komponenten vorzugsweise einer Vorvernetzung, also einer Prepolymerisierung unterzogen.

Innerhalb des Ziehturms 4 erfolgt eine erste Vernetzung des Ausgangsstoffes A, so dass die Faser 16 am Ende des Ziehturmes 4 bereits mechanisch belastbar ist. Die Faser 16 durchläuft hierbei im Behälter 5 das beheizte Öl und wird im unteren Bereich aus dem Behälter 5 durch eine Blende 20 mit Hilfe einer Bandziehvorrichtung 22 abgezogen. Die teilvernetzte und mechanisch belastbare Faser 16 wird über Umlenkrollen 24 umgelenkt und der nachfolgenden Nachvernetzungvorrichtung 6 zugeführt. Diese ist gebildet durch ein ebenfalls mit Öl gefülltem Becken, das auf beispielsweise 60° aufgeheizt ist. Das temperierte Öl bewirkt ein weiteres Vernetzen der Faser 16. Das Öl fungiert daher nach Art einer Stützflüssigkeit zur Formgebung und Formerhaltung der sich ausbildenden Faser 16. Als Öl wird ein synthetisches oder auch ein natürliches Öl (Weißöl, Parrafinum Liquidum) eingesetzt. Bei dem Öl kann es sich auch um ein fluoriertes Öl handeln.

Nach dem Ziehturm 4 durchläuft die Faser 16 die Nachvernetzungsvorrichtung 6, die nach Art eines Bades ausgebildet ist, das von der Faser 16 durchlaufen wird. In dieser Vorrichtung 6 ist daher vorzugsweise ebenfalls ein flüssiges Medium, nämlich ein inertes Mineralöl oder auch Pflanzenöl eingesetzt. Alternativ kann auch Wasser eingesetzt werden.

Die Faser 16 wird anschließend in die erste Reinigungseinrichtung 8 geleitet. Hier wird die Faser 16 vorzugsweise unter Ultraschalleinwirkung mit einer vorzugsweise alkalischen Reinigungslösung gespült und vom Öl befreit. Schließlich wird in der zweiten Reinigungseinrichtung 10 beispielsweise ähnlich wie in der ersten Reinigungseinheit 8 auch mit Hilfe von Ultraschall mit vorzugsweise destilliertem Wasser die Rückstände der Reinigungslösung entfernt. In beiden Reinigungsvorrichtungen 8,10 wird die Reinigungsflüssigkeit vorzugsweise erwärmt, um eine weitergehende Vernetzung zu unterstützen.

Nach der Reinigungseinrichtung 10 durchläuft die Faser 16 schließlich die Trocknungsvorrichtung 12. Die Trocknung erfolgt beispielsweise mittels Infrarot-Heizstrahlern. Die Wärmebestrahlung unterstützt wiederum die Nachvernetzung. Schließlich wird die Faser 16 möglichst zugfrei in der Aufwicklungsvorrichtung 14 auf eine Spule 26 aufgewickelt. Die Faser 16 befindet sich zu diesem Zeitpunkt immer noch in einem nicht vollständig vernetzten Zustand. Die aufgewickelte Faser 16 wird daher noch einem anschließenden so genannten Reifeprozess unterzogen, währenddessen eine weitere Trocknung sowie eine weitere Vernetzung erfolgt. Die Trocknung erfolgt hierbei wiederum bei einer erhöhten Temperatur im Bereich beispielsweise von 50°C und vorzugsweise bei Unterdruck. Während dieses Reifezeitraums, der mehrere Stunden oder Tage dauert, wird die Spule 26 unter Schutzatmosphäre gelagert bzw. beispielsweise durch luftdichtes Verpacken, wie beispielsweise Einschweißen vordem Luftsauerstoff geschützt.

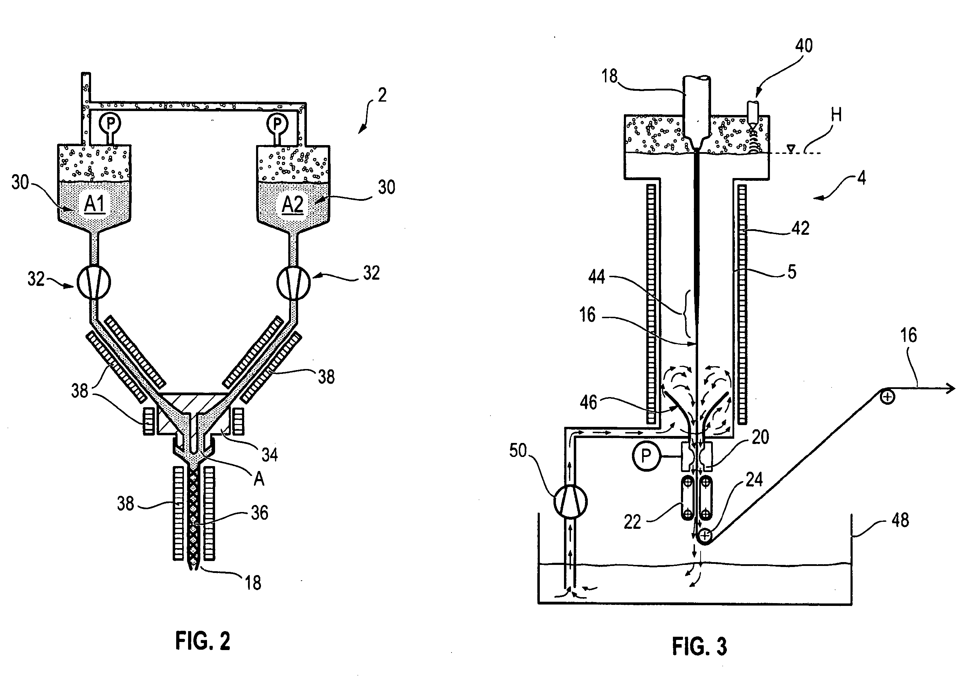

Der Aufbau der Dosiervorrichtung 2 wird im Folgenden im Detail anhand der Fig. 2 beschrieben. Danach umfasst die Dosiervorrichtung 2 zwei Vorratsbehälter 30, in denen zwei reaktive Komponenten A1, A2 bevorratet werden, die miteinander zum reaktiven Ausgangsstoff A vermischt werden. Bei den beiden reaktiven Komponenten A1 ,A2 handelt es sich vorzugsweise um die zwei Komponenten eines zweikomponentigen Polyurethan-Systems, nämlich auf der einen Seite ein Polyol (Harz) und auf der anderen Seite ein Vernetzer (Härter), insbesondere ein Polyisocyanat. Das Polyol ist hierbei bereits mit einem Katalysator sowie vorzugsweise mit einem ergänzenden Additiv gegen einen thermooxidativen Abbau versehen.

Die beiden Vorratsbehälter 30 sind über ein Drucksystem mit Druck beaufschlagt. Hierzu werden die beiden Vorratsbehälter 30 über ein Druckleitungssystem mit einem inerten Gas, wie beispielsweise Argon, mit Druck beaufschlagt. Den beiden Vorratsbehältern 30 nachgeschaltet ist jeweils eine Dosierpumpe 32 zum Fördern der zähflüssigen Ausgangskomponenten A1,A2. Die beiden Ausgangskomponenten werden anschließend in einem Dosierkopf 34 zusammengeführt und anschließend in einem Mischer 36 homogen miteinander vermischt, bevor sie als reaktiver Ausgangsstoff A die Düse 18 erreichen, aus der dann ein vorgeformter Faserstrang heraustritt.

Bei der dargestellten Dosiervorrichtung 2 befinden sich an mehreren Stellen Temperiereinrichtungen 38, um die reaktiven Ausgangskomponenten A1 ,A2 zu kühlen und zwar vorzugsweise auf eine Temperatur im Bereich - 10°C, um eine Vernetzung bereits innerhalb der Dosiervorrichtung 2 zu vermeiden. Alternativ oder ergänzend kann hierbei vorgesehen sein, dass zumindest eine der reaktiven Komponenten bzw. eine der für die Vernetzung wirksamen funktionellen Gruppen blockiert ist, so dass zunächst keine Vernetzung stattfindet. Über die beiden Dosierpumpen 32 erfolgt eine hochgenaue Dosierung der beiden Ausgangskomponenten A1 ,A2 in dem gewünschten Mischungsverhältnis. Die Druckbeaufschlagung der beiden Vorratsbehälter 30 dient zur Vermeidung von Lunkern oder Hohlräumen, so dass immer im gewünschten Verhältnis dosiert wird.

Der Aufbau des Ziehturms 4 ergibt sich beispielhaft insbesondere aus der Fig. 3. Die die Düse verlassende Faser 16 tritt in Öl ein, dessen Füllstandshöhe H bis auf unmittelbar unterhalb des Düsenaustritts geregelt wird. Im Bereich des Düsenkopfes wird mit einem inerten Gas (Argon) gespült, um eine Reaktion mit Luftsauerstoff zu vermeiden. Die Füllstandshöhe H wird mit Hilfe eines Niveausensors 40 überwacht. Aus der Düse 18 tritt die Faser 16 mit einem Durchmesser aus, der größer ist als der gewünschte Enddurchmesser. Das Öl ist innerhalb des zylindrischen Behälters 5 angeordnet, der sich zur Düse 18 hin verbreitert. Die Düse 18 taucht in diesen oberen Kopfbereich des Behälters 5 bis nahe zur Füllstandshöhe ein. Der Behälter 5 weist eine Heizeinrichtung auf, die im Ausführungsbeispiel als Heizmantel 42 ausgebildet ist, der das Öl auf eine gewünschte Solltemperatur regelt. Die Temperatur wird hierbei derart eingestellt, dass am Ende des Behälters 5 die Faser 16 bereits einen teilvernetzten Zustand erreicht hat, so dass die Faser 16 den weiteren Behandlungsschritten über einen mechanischen Transport zuführbar ist. Die Temperatur wird hierbei beispielsweise auf 45°C eingestellt. Mit zunehmendem Abstand von der Düse 18 steigt daher der Vernetzungsgrad zusehends an.

Die Temperatur und die Länge des Behälters ist nunmehr derart eingestellt, dass innerhalb des Behälters 5 die Faser 16 eine gelartige Konsistenz erreicht. Dieser Bereich wird als Gelierbereich 44 bezeichnet. Räumlich vor dem Gelierbereich 44 ist die Faser 16 noch zähflüssig, danach im Wesentlichen fest. Daher ist ermöglich, dass im unteren Bereich über die Bandziehvorrichtung 22 die Faser 16 nach unten abgezogen wird. Durch dieses Abziehen mit definierter Abzugsgeschwindigkeit wird die Faser 16 im Gelierbereich 44, in dem sie geometrisch noch formbar ist, auf den gewünschten Enddurchmesser gezogen. Der Enddurchmesser lässt sich daher neben der Dosierrate auch über die Abzugsgeschwindigkeit einstellen.

Die bereits auf Sollmaß gezogene Faser 16 wird anschließend über eine Austrittsschleuse 46 durch die Blende 20 aus dem Behälter 5 gezogen. Die Blende 20 wirkt als Abscheide- bzw. Rückhalteeinrichtung für das Öl. Lediglich ein geringer Teil des Öls wird mit der Faser 16 aus dem Behälter 5 mit herausgeführt. Nach der Blende 20 ist die Bandabziehvorrichtung 22 angeordnet, die zwei gegensinnig laufende Bänder umfasst, die eine glatte bzw. beschichtete Oberfläche aufweisen, um eine Verletzung der Faser 16 zu verhindern.

Nachfolgend zu der Bandabziehvorrichtung 22 ist die erste Umlenkrolle 24 angeordnet. Öl welches durch die Blende 20 mit ausgetreten ist, tropft an der Umlenkrolle 24 ab und wird von einem Auffangbehälter 48 aufgefangen. Aus diesem wird das Öl mittels einer Ölpumpe 50 wieder geregelt in den Ziehturm 4 zurückgepumpt. Die den Ziehturm 4 verlassende Faser 16 ist weiterhin mit dem Öl benetzt.

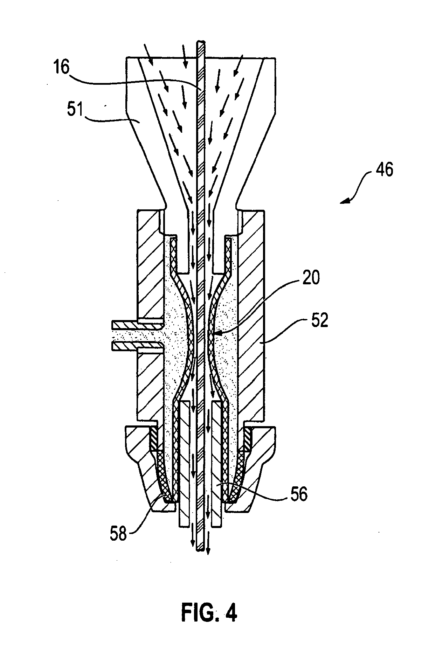

Der Aufbau der Austrittsschleuse 46 ist im Detail aus Fig. 4 zu entnehmen. Die Austrittsschleuse 46 ist insbesondere als eine dynamische, vorzugsweise selbstregulierende Blendeneinrichtung ausgebildet, die sich jeweils dem aktuellen Faserdurchmesser anpasst, um eine möglichst gute Rückhaltewirkung zu erzielen. Die Austrittsschleuse 46 ist als eine insbesondere auswechselbare Baueinheit ausgebildet, die einen Trichter 51 an ihrem oberen Ende umfasst, welcher auswechselbar mit dem Behälter 5 verbindbar ist. An diesen schließt sich eine beispielsweise angeschraubte Druckkammer 52 an, die über einen Druckstutzen beispielsweise mit einem vorzugsweise inertem Druckgas beaufschlagbar ist. Im Inneren der Druckkammer 52 lässt sich daher ein vorgebbarer Druck einstellen. An die Austrittsöffnung des Trichters 46 schließt sich als eigentliche Blende 20 ein elastischer Schlauch an, der aufgrund seiner Elastizität von dem in der Druckkammer 52 herrschenden Druck gegen die Faseroberfläche der Faser 16 gedrückt wird. Im unteren Bereich ist der Schlauch über eine Stützhülse 56 gestülpt, durch die die Faser 16 die Blende 20 wieder verlässt. Über eine zusätzliche Dichtlippe 58 ist die Druckkammer 52 zur Stützhülse 56 hin abgedichtet.

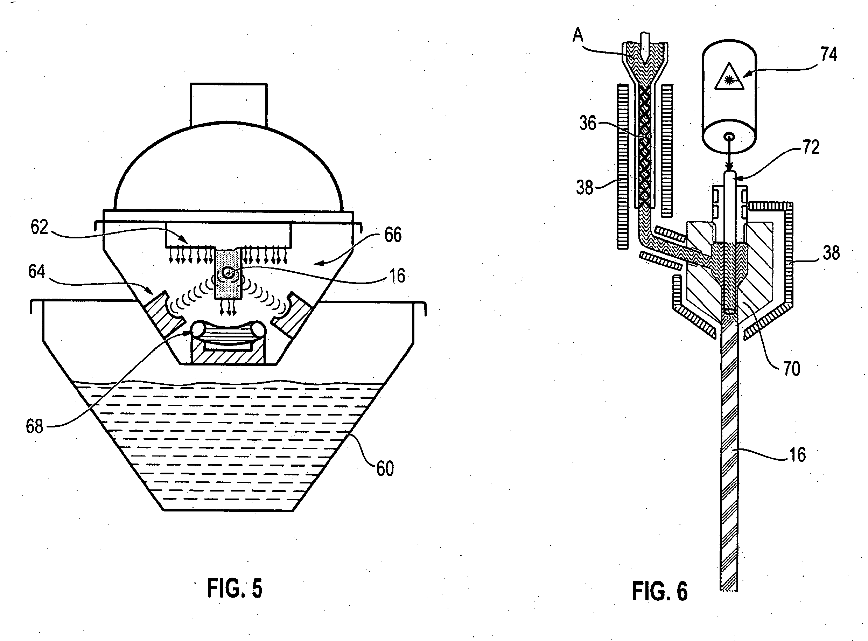

Die beiden Reinigungsvorrichtungen 8,10 weisen beispielsweise den in Fig. 5 dargestellten Aufbau auf. Danach ist ein Sammelbecken 60 unterhalb der Faser 16 vorgesehen. Oberhalb der Faser 16 wird die jeweilige Reinigungsflüssigkeit von oben auf die Faser 16 gebracht. Dies geschieht beispielsweise dadurch, dass die Reinigungsflüssigkeit über eine Überlaufkante 62 auf die Faser 16 herunterfällt. Ergänzend sind Ultraschallköpfe 64 vorgesehen, die auf die Faser 16 ausgerichtet sind. Der Brennpunkt der konkav ausgebildeten Ultraschallköpfe 64 befindet sich in der Faser 16. Die Ultraschallköpfe 64 sind dabei innerhalb eines Überlaufbeckens 66 angeordnet. Im unteren Bereich des Überlaufbeckens 66 ist ein beispielsweise als Rohrwärmetauscher ausgebildetes Heizelement 68 zum Beheizen der Reinigungsflüssigkeit vorgesehen. Oberhalb des Überlaufbeckens 66 ist hoch eine Absaugvorrichtung angeordnet.

Die zu der Gesamtvorrichtung in Fig. 1 in den Fig. 2 bis 5 näher beschriebenen Einzelvorrichtungen weisen jeweils für sich betrachtet - auch unabhängig voneinander - eigenständige erfinderische Lösungskonzepte, auch in einzelnen Details auf.

Alternativ zu der Vernetzung im Ziehturm 4 ist gemäß dem Ausführungsbeispiel nach der Fig. 6 eine Vernetzung mit Hilfe von hochenergetischen Licht, nämlich mit Hilfe von Laserlicht, vorgesehen. Der entsprechend einem gewünschten Mischungsverhältnis gemischte reaktive Ausgangsstoff A wird einer speziellen Düse 70 seitlich zugeführt. Von oben in vertikaler Richtung ist in die Düse 70 ein Lichtwellenleiter 72 eingeführt, welcher bis nahe zur Düsenaustrittsöffnung reicht. Auch hier ist zur Verhinderung einer frühzeitigen Vernetzung sowohl der Mischer 36 als auch die Düse 70 von der Temperiereinrichtung 38 umgeben.

Der Lichtwellenleiter 72 ist koaxial zur Düsenöffnung angeordnet, so dass der zähflüssige Ausgangsstoff A etwa ringförmig um den Lichtwellenleiter 72 herum durch die Düsenöffnung herausgedrückt wird und anschließend den Faserstrang ausbildet. Über den Lichtwellenleiter 72 wird im Betrieb Laserlicht von einem Laser 74 in Axialrichtung direkt in den Faserstrang eingekoppelt, so dass infolge des Laserlichts unmittelbar im Anschluss an die Austrittsöffnung der Düse 70 die Vernetzung beginnt. Die sich nach der Düse 70 ausbildende Faser 16 wird unter einer Schutzatmosphäre beispielsweise unter einer Argon-Atmosphäre geführt. Bereits nach kurzer Strecke ist die Faser 16 vollständig vernetzt, so dass nachfolgende Behandlungsschritte nicht mehr zwingend erforderlich sind. Bei Bedarf kann auch hier ein zusätzlicher Reifeprozess mit einer geeigneten Lagerung bei erhöhter Temperatur vorgesehen sein.

Die Formgebung der Faser 16 auf den gewünschten Solldurchmesser wird hierbei durch die austrittsseitige Düsengeometrie der Düse 70 definiert.

Als reaktiver Ausgangsstoff A sind unterschiedliche ein- oder mehrkomponentige reaktive Stoffsysteme einsetzbar. Als besonders geeignet haben sich Stoffsysteme auf Polyurethanbasis herausgestellt. Diese zeigen eine in technischer Hinsicht mit den oben beschriebenen Verfahren gute technische Verarbeitbarkeit und erlauben zugleich eine kontinuierliche Fertigung mit gleichbleibend hoher Qualität.

Vorzugsweise wird ein Zweikomponenten-Polyurethan-System verwendet umfassend ein Polyol mit vorzugsweise geringem Molekulargewicht (<10.000 Dalton) sowie ein oligomeres Polyisocyanat. Die an der Vernetzungsreaktion teilnehmenden funktionellen Gruppen sind auf Seiten des Polyols Hydroxylgruppen (OH) und auf Seiten des Polyisocyanats (NCO-) Gruppen. Die Vernetzungsreaktion ist hierbei eine Additionsreaktion, die den Vorteil hat, dass keine Spalt- oder Nebenprodukte entstehen. Auf Seiten der Polyisocyanate werden vorzugsweise solche auf Basis von Hexamethylendiisocyanat (HDI) eingesetzt. Aufgrund der aliphatischen Struktur verfügt dieser Vernetzer über eine bessere Lichtbeständigkeit im Unterschied zu den zur Vergilbung neigenden, aromatischen Polyisocyanaten. Desweiteren führen Polyisocyanate auf Basis von linearem HDI zu sehr flexiblen Werkstoffeigenschaften, wie sie für die hier vorliegende Faser benötigt wird (Biegeradien, niederer Glasübergangspunkt).

Da Polyisocyanate auf Basis von aromatischen Diisocyanaten zur Vergilbung neigen und aufgrund einer sperrigen Ringstruktur zu einem eher unelastischen Material führen, sind aromatische Polyisocyanate weniger geeignet. Auch Polyisocyanate auf Basis von cycloaliphatischen Diisocyanaten führen aufgrund der sperrigen Struktur zu einem eher unelastischen Material und sind daher eher ungeeignet. Insbesondere auch im Hinblick auf eine gute Beständigkeit hinsichtlich einer thermooxidativen Alterung bei Temperaturen >70°C werden vorzugsweise aliphatische Polyisocyanate mit Isolcyanurat-Struktur auf Basis Hexamethylendiisocyanat verwendet.

Auf Seiten der Polyole werden die üblichen für Polyurethan-Systeme herangezogenen Polyole eingesetzt. Da die Polyolkomponente die elastischen Eigenschaften des Polyurethans beeinflusst, werden vorzugsweise Polyole mit zwei oder drei Hydroxylgruppen pro Molekül eingesetzt.

Generell kann die Formulierung und Zusammensetzung der Polyolausgangskomponenten frei gestaltet werden. So können beispielsweise auf Basis von niedermolekularen Polyolen oder auch Aminen so genannte Kettenverlängerer zugegeben werden. Auch können Polyolgemische mit unterschiedlicher Struktur, Molekulargewicht oder Funktionalität eingesetzt werden. Von Bedeutung ist, dass diese Ausgangskomponenten in ihrer Funktionalität und Polymerstruktur jedoch so abgestimmt sind, dass die reaktiven funktionellen Gruppen idealerweise vollständig, also stöchiometrisch miteinander vernetzen. Für die Ausbildung eines idealen Netzwerkes kann z.B. ein lineares Polyol mit einem verzweigten Polyisocyanat vernetzt werden.

Bei der Vernetzungsreaktion kann es im Rahmen einer Anfangsvernetzung zu der Ausbildung von vielen Vernetzungspunkten in kurzer Zeit kommen, wodurch die Mobilität der Polymere stark eingeschränkt ist, was dazu führt, dass eine vollständige Vernetzung nur noch schwer zu erreichen ist und real ein Netzwerk mit so genannten Fehlstellen, also unbesetzten funktionellen NCO- oder OH-Gruppen entsteht. Diese unbesetzten funktionellen Gruppen können langfristig zu einer Verschlechterung der Lichtleiteigenschaften der Faser führen und die Vergilbungsneigung erhöhen.

Um diese Fehlstellen zu vermeiden bzw. wieder zu entfernen, werden vorzugsweise gezielt niedermolekulare reaktive Moleküle oder auch Monole beigemischt. Diese Molekularweisen aufgrund ihrer kleinen Molekülgröße eine hohe Mobilität auf und können daher derartige Fehlstellen wieder vernetzen. Alternativ kann die Faser auch während des Herstellungsprozesses oder auch nachträglich mit geeigneten mono- oder difunktionellen Molekülen oder Olygomeren nachbehandelt werden. Dies kann beispielsweise in einem Träger-Lösemittel vorgenommen werden, mit denen die Moleküle in das Faserinnere eindringen. Anschließend wird dann der Träger bzw. das Lösemittel wieder entfernt.

Alternativ oder ergänzend wird gezielt außerstöchiometrisch formuliert, um im Überschuss vorliegende funktionelle Gruppen vorliegen zu haben, die nachträglich mit einem ausgewählten reaktiven Werkstoff vernetzt werden. Beispielsweise wird nach der eigentlichen Faserherstellung die Faseroberfläche fluoriert, beispielsweise mit Fluorpolyolen. Hierdurch wird die Faser hinsichtlich der chemischen und thermischen Beständigkeit besser geschützt und/oder es wird auf diese Weise eine Claddingschicht ausgebildet. Eine Claddingschicht wird allgemein bei herkömmlichen Lichtleiterfasern dafür herangezogen, dass an der Grenzfläche eine Totalreflexion auftritt, so dass eine möglichst hundertprozentige Lichtausbreitung innerhalb der Lichtwellenleiterfaser erfolgt.

Bei dem hier vorgesehenen bevorzugten Einsatzzweck für die elastomere Lichtteiterfaser unter Ausnutzung des so genannten Evanescentfeldes ist allerdings gerade eine claddingfreie Lichtleiterfaser vorgesehen.

Um die Vernetzungsreaktion zu beschleunigen ist dem Polyol vorzugsweise noch ein Katalysator beigemischt. Weiterhin sind Antioxidanten und Stabilisatoren als Additive vorgesehen, um die Faser gegen thermooxidativen Ablauf zu schützen.

Als Polyole werden neben den Polycaprolactonen auch Polyester-Polyether-Polycarbonatpolyole/Polycarbonatdiole oder fluorierte Polyeterpolyole oder Mischungen von diesen genannten Polyalkoholen als Harzkomponente eingesetzt. Auch können monomere Diole oder höherwertige niedermolekulare Alkohole als Kettenverlängerer oder Vernetzungszentren verwendet werden, um die Festigkeit/Härte zu erhöhen sowie Monole, um unvernetzte Isocyanatgruppen nachzuvernetzen. Des Weiteren können auch Polyhydroxyl-Verbindungen mit primären und sekundären oder tertiären Hydroxylgruppen eingemischt werden, um die Vernetzungsdichte und damit auch die Festigkeitseigenschaften zu erhöhen und auf die Werkstoffeigenschaften (Zugfestigkeit, Dehnung, Härte etc.).

So hat beispielsweise die Struktur des Polyols sowie des Polyisocyanates (linear oder verzweigt) Einfluss auf die Ausbildung der Netzwerkstruktur und auf die Werkstoffeigenschaften wie Zugfestigkeit, Dehnung, Härte etc.-der Faser. Bei einem niederwertigen Polyol kann z.B. trotz einer linearen Molekülstruktur die Anzahl von drei oder mehr Hydroxylgruppen bewirken, dass eine vernetzte Polymerstruktur entsteht. Des Weiteren beeinflusst das Molekulargewicht der Polyole und Polyisocyanate mit primären reaktiven Gruppen die Werkstoffeigenschaften, da die Vernetzungsstellen mit zunehmendem Molekulargewicht abnehmen und umgekehrt.

Ebenso wirkt sich das Verhältnis derjenigen Komponente, welche den "harten" Werkstoffanteil bildet (dies kann der Härter sein, wie z.B. das Polyisocyanat, aber auch Kettenverlängerer, wie kurzkettige Diole, wie Butandiol) zu der Komponente, welche den "weichen" Werkstoff bildet (in der Regel das Polyol) auf die Werkstoffeigenschaften aus. Bei zunehmendem Anteil an "harten" Komponenten steigt in der Regel der Glaspunkt, die Bruchdehnung nimmt ab, die Zugfestigkeit bei Bruch zu und die Shore-Härte steigt.

Zweckdienlicherweise wird als Polyol ein dreiwertiger Alkohol, insbesondere auf Basis eines Polycaprolactones eingesetzt. Das mittlere Molekulargewicht liegt im Bereich von etwa 540. Weiterhin liegen primäre OH-Gruppen vor. Aufgrund der dreiwertigen Funktionalität und der hiermit verbundenen verzweigten Y-Struktur trägt dieses Polyol zur räumlichen Netzwerkausbildung mit. Die Eigenschaften der Faser, wie beispielsweise die Lage des Glasübergangspunktes, Dehnungswert und Festigkeitseigenschaften, werden auch über die Struktur des Polyols (Polycaprolactonpolymer), nämlich ob linear oder verzweigt, das Molekulargewicht und hiermit verbunden die Reaktivitätskennzahl, nämlich der Gehalt an OH-Gruppen, beeinflusst. So verschiebt eine verzweigte Polyolstruktür sowie eine hohe Reaktivitätskennzahl (bei den Polycaprolactonen gleichbedeutend mit einem niederen Molekulargewicht) den Glaspunkt nach oben. Die Bruchdehnung nimmt ab und die Zugfestigkeit bei Bruch zu. Ein lineares zweiwertiges Polycaprolactonpolyol wirkt elastifizierend, d.h. der Glaspunkt wird nach unten verschoben und die Bruchdehnung nimmt in der Regel zu, die Zugfestigkeit bei Bruch ab. Sehr elastische Werkstoffeigenschaften mit niederem Glaspunkt und hohen Dehnungseigenschaften können mit langkettigen, linearen Polyolen und hiermit verbunden einer geringen Vernetzungsdichte (größeres Molekulargewicht und wenig Vernetzungsstellen) eingestellt werden. Generell ist daher festzuhalten, dass über die Auswahl der Ausgangskomponenten eine große Designfreiheit im Hinblick auf die Einstellung der sowohl mechanischen als auch optischen Eigenschaften der Lichtleitfaser möglich ist.

Die Struktur, Funktionalität und Reaktivität der Polyole und Polyisocyanate wird allgemein so ausgewählt und aufeinander abgestimmt, dass nach der Vernetzung eine dreidimensional vernetzte Polymerstruktur vorliegt und keine kristallinen Bereiche gebildet werden, welche in der Faser bei der Einkopplung von Licht als Streuzentren wirken und die Dämpfung erhöhen.

Nachfolgend werden zwei Beispielformulierungen für eine zweikomponentige Lichtleitfaser auf Basis eines Polyurethan-Systems angeführt:
Komponente A1:
   98,34 Gew.-% Harzkomponente (Polyol), nämlich dreiwertiges Polyol auf Basis Polycaprolacton mit primären OH-Gruppen; Hydroxylzahl 310 mgKOH/g, mittleres Molekulargewicht von ca. 540, beispielsweise bekannt unter dem Handelsnamen "Capa 3050" der Firma Solvay,
   1,1 Gew.-% Additivkomponente, nämlich ein multifunktionaler Stabilisator gegen thermooxidativen Abbau, beispielsweise das unter dem Handelsnamen "Irganox 1726" erhältliche Produkt der Firma Ciba Speciality Chemicals,
   0,55 Gew.-% Katalysator, nämlich Zinnkatalysator auf Basis Dimethylbis ((1oxoneodecyl)oxy)stannan.
Komponente A2 (Polyisocyanat):
   100 Gew.-% des beispielsweise unter dem Handelsnamen "Desmodur N100" bekannten Härters mit einem NCO-Gehalt von etwa 22%.

Die beiden Komponenten A1 ,A2 werden etwa unter einem Mischungsverhältnis von 100 : 114 miteinander vermischt. Der Anteil des Stabilisators am Gewichtsanteil der Komponente A kann hierbei zwischen 1 und 5% und der Gewichtsanteil des Katalysators am Anteil der Komponente A1 zwischen 0,3 und 1 Gew.-% betragen. Bestimmend für die Vernetzung sind die so genannten Reaktivitätskennzahlen, das sind beim Isocyanat der Gehalt an den Isocyanatgruppen in Gew.-% und beim Polyol der Gehalt an Hydroxylgruppen angegeben als KOH-Zahl (mg/g). Diese Reaktivitätskennzahlen können mit jeder gelieferten Charge der Harzkomponente bzw. des Härters in gewissen Bandbreiten variieren. Bei der oben angegebenen Formulierung wurde von einer Hydroxylzahl im Bereich zwischen 310 - 320 KOH (mg/g) und einem Isocyanatgehalt im Bereich von 21 - 22% ausgegangen. Falls diese Reaktivitätszahlen bei den jeweiligen Chargen abweichen, so ist eine entsprechende Korrektur der Einwaagen erforderlich, so dass grundsätzlich ein molarer Vernetzungsgrad der NCO-Gruppen zu den OH-Gruppen im Bereich 1,3 : 1 bis 0,9 : 1 eingestellt wird. Als besonders vorteilhaft hat sich ein Umsetzungsgrad/Vernetzungsgrad von 1,1 : 1 (NCO/OH) erwiesen.

Eine mit einer derartigen Formulierung hergestellte Lichtleitfaser eignet sich insbesondere für das zu den Fig. 1 bis 5 kontinuierliche Herstellungsverfahren, ebenso auch für das zu der Fig. 6 beschriebene kontinuierliche Herstellungsverfahren. Eine derart ausgebildete Lichtleitfaser weist eine Bruchdehnung von mehr als 100% auf. Die maximale Zugspannung liegt bei etwa 80 MPa. Der Glaspunkt (DSC) liegt im Bereich zwischen 20° und 30°C und die optische Dämpfung bei einer Laserwellenlänge von 632 nm bei Raumtemperatur liegt unter 3 dB/m.

Alternativ zu den kontinuierlichen Herstellungsverfahren kann prinzipiell auch ein diskontinuierliches Herstellungsverfahren eingesetzt werden, bei dem die reaktiven Komponenten beispielsweise in einen Schlauch oder auch in eine Form eingebracht und dort vemetzt werden, bevor anschließend die Form geöffnet bzw. der Schlauch wieder entfernt wird. Bei einer derartigen Formulierung ist die Komponente A1 beispielsweise aus 98,5% der bei der obigen Formulierung angegebenen Harzkomponente und etwa 1,5% der Additivkomponente zusammengesetzt. Auf die Beimischung eines Katalysators kann hierbei also verzichtet werden. Die Härter-Komponente ist die Gleiche wie in der obigen Formulierung.

Eine derartig elastomere Kunststofflichtleitfaser auf Basis eines Polyurethan-Systems weist einen Temperatur-Einsatzbereich bis weit über 100°C auf. Allgemein hat ein derartiges Polyurethan-Elastomer eine sehr hohe Bruchdehnung. Im Vergleich zu herkömmlichen thermoplastischen amorphen Lichtwellenleitern können mit einem derartigen elastomeren Lichtleiter wesentlich kleinere Biegeradien realisiert werden, so dass die Lichtleitfasern auch auf engstem Raum verlegt werden können. Auch sind die elastomeren Lichtleitfasern aufgrund der Vernetzungsstellen deutlich unempfindlicher gegen die Bildung von Spannungsrissen. Aufgrund des Vernetzens schmilzt der Lichtwellenleiter bei höheren Temperaturen auch nicht auf, sondern geht direkt in eine Materialzersetzung über. Allgemein liegt die optische Dämpfung der elastomeren Lichtleitfaser im Bereich zwischen 2 bis 5 dB/m bei einer Lichtwellenlänge von etwa 630 nm. Damit lassen sich problemlos Übertragungsstrecken von bis zu einigen Metern erreichen, welche für die vorgesehenen Anwendungsgebiete beispielsweise in der Automobiltechnik, vollständig ausreichend sind. Insbesondere wird die Lichtleitfaser im Bereich der Sensortechnik eingesetzt. Auch kann die Lichtleitfaser mit Cladding für die Signal- oder Datenübertragung auf kurzen Strecken eingesetzt werden. Ferner kann die Lichtleitfaser natürlich für Beleuchtungszwecke etc. herangezogen werden.

Alternativ zu dem hier beschriebenen System, bei dem der Ausgangsstoff A von oben nach unten eingebracht wird, ist es prinzipiell auch möglich, dass der Ausgangsstoff A von unten in eine Stützflüssigkeit eingespritzt wird. In diesem Fall muss die Stützflüssigkeit eine größere Dichte als der Ausgangsstoff haben. Prinzipiell lässt sich der Ausgangsstoff auch horizontal in die Reaktionsvorrichtung einbringen.

**Bezugszeichenliste**

| | | | |
|---|---|---|---|
| 2 | Dosiervorrichtung | 44 | Gelierbereich |
| 4 | Ziehturm | 46 | Trichter |
| 5 | Behälter | 48 | Auffangbehälter |
| 6 | Nachvernetzungsvorrichtung | 50 | Ölpumpe |
| 8 | erste Reinigungsvorrichtung | 51 | Trichter |
| 10 | zweite Reinigungsvorrichtung | 52 | Druckkammer |
| 12 | Trocknungsvorrichtung | 56 | Stützhülse |
| 14 | Aufwickelvorrichtung | 58 | Dichtlippe |
| 16 | Faser | 60 | Sammelbecken |
| 18 | Düse | 62 | Überlaufkante |
| 20 | Blende | 64 | Ultraschallkopf |
| 22 | Bandziehvorrichtung | 66 | Überlaufbecken |
| 24 | Umlenkrolle | 68 | Heizelement |
| 26 | Spule | 70 | Düse |
| 30 | Vorratsbehälter | 72 | Lichtwellenleiter |
| 32 | Dosierpumpe | 74 | Laser |
| 34 | Dosierkopf | | |
| 36 | Mischer | A | Ausgangsstoff |
| 38 | Temperiereinrichtung | A1,A2 | reaktive Komponente |
| 40 | Niveausensor | H | Füllstandshöhe |
| 42 | Heizmantel | | |

## Patentansprüche

1. Verfahren zum Herstellen einer elastomeren Lichtleitfaser aus Kunststoff, bei dem aus einem zähflüssigen reaktiven Ausgangsstoff (A) eine Faser (16) gezogen und der Ausgangsstoff (A) vernetzt wird, indem wahlweise oder in Kombination
- der Ausgangsstoff (A) über eine Düse (18) in eine Reaktionsvorrichtung (5) gegeben wird, die mit einer gegenüber dem Ausgangsstoff (A) inerten Flüssigkeit gefüllt ist und in der zumindest eine teilweise Vernetzung des Ausgangsstoffs (A) erfolgt,
- der Ausgangsstoff (A) über die Düse (70) geformt und mit Hilfe von Laserlicht vernetzt wird, das in der Düse (70) in Längsrichtung in den Ausgangstoff (A) eingeleitet wird,
wobei mehrere reaktive Ausgangskomponenten (A1,A2) in einer Dosiervorrichtung (2) miteinander in vorgegebener Zusammensetzung vermischt und der Düse (18,70) als Ausgangsstoff (A) zugeleitet werden und der reaktive Ausgangsstoff (A) gekühlt wird, bis er in die Reaktionsvorrichtung (5) gelangt, beziehungsweise bis zur Düse (70) im Falle der Vernetzung mit Laserlicht.

2. Verfahren nach Anspruch 1,
**dadurch gekennzeichnet,**
**dass** der Ausgangsstoff (A) in der Reaktionsvorrichtung sich über eine Fallhöhe von wenigen Metern aufgrund seines Eigengewichts nach unten bewegt und von der Flüssigkeit gebremst wird.

3. Verfahren nach Anspruch 1 oder 2,
**dadurch gekennzeichnet,**
**dass** die Flüssigkeit temperiert ist.

4. Verfahren nach einem der vorhergehenden Ansprüche,
**dadurch gekennzeichnet,**
**dass** die Flüssigkeit ein Öl mit geringerer Dichte als der Ausgangsstoff (A) ist.

5. Verfahren nach einem der vorhergehenden Ansprüche,
**dadurch gekennzeichnet,**
**dass** nach einer Teilvernetzung die Faser (16) aktiv auf einen gewünschten Enddurchmesser gezogen wird.

6. Verfahren nach einem der vorhergehenden Ansprüche,
**dadurch gekennzeichnet,**
**dass** die Faser (16) im Endbereich der Reaktionsvorrichtung (5) durch eine an den Faserdurchmesser angepassten Blende (20) gezogen wird.

7. Verfahren nach Anspruch 6,
**dadurch gekennzeichnet,**
**dass** die die Blende (20) dynamisch einstellbar ist.

8. Verfahren nach Anspruch 6 oder 7,
**dadurch gekennzeichnet,**
**dass** die Blende (20) als ein elastisch verformbarer Schlauch ausgebildet ist, der von Außen mit Druck beaufschlagbar ist und an der Faser (16) anliegt.

9. Verfahren nach einem der Ansprüche 6 bis 8,
**dadurch gekennzeichnet,**
**dass** nach der Blende (20) eine Bandziehvorrichtung (22) angeordnet ist, bei der die Faser (16) zwischen zwei sich gegenläufig drehenden Bändern mit glatter Oberfläche gegriffen und gezogen wird.

10. Verfahren nach einem der vorhergehenden Ansprüche,
**dadurch gekennzeichnet,**
**dass** die teilvernetzte Faser (16) im Nachgang zur Reaktionsvorrichtung (5) nachvernetzt und gereinigt wird und hierzu wahlweise oder in Kombination
- zur weiteren Vernetzung durch ein beheiztes Bad (6) gezogen wird
- zum Reinigen durch eine beheizte Reinigungseinrichtung (8,10) gezogen wird,
- in der Reinigungseinrichtung (8,10) durch kontinuierliches Umwälzen einer Spülflüssigkeit insbesondere unter Einwirkung von Ultraschall gespült wird,
- unter Unterdruck getrocknet sowie
- bis zu einer vollständigen Vernetzung gelagert wird.

11. Verfahren zum Herstellen einer Lichtleitfaser aus Kunststoff nach einem der vorhergehenden Ansprüche,
**dadurch gekennzeichnet,**
**dass** der Ausgangsstoff (A) ein reaktives, räumlich vernetzbares PolyurethanSystem ist, insbesondere ein 2-Komponenten-System mit einem Polyol sowie einem Polyisocyanat als Vernetzer, wobei die Vernetzung über eine Polyadditionsreaktion der funktionellen Gruppe (OH) des Polyols mit der funktionellen Gruppe (NCO) des Polyisocyanats erfolgt und das molare Verhältnis der funktionellen Gruppen NCO : OH insbesondere im Bereich zwischen 1,3 : 1 und 0,9 : 1 und insbesondere bei 1,1 : 1 liegt.

12. Vorrichtung zum Herstellen einer Lichtleitfaser mit einem Verfahren nach einem der vorhergehenden Ansprüche, mit einer eine Düse (18, 70) umfassenden Dosiervorrichtung (2) für einen zähflüssigen reaktiven Ausgangsstoff (A), wobei die Dosiervorrichtung (2) zum Vermischen mehrerer reaktiver Ausgangskomponenten (A1,A2) zum Ausgangsstoff (A) ausgebildet ist und Temperiereinrichtungen (38) zum Kühlen der reaktiven Ausgangskomponenten (A1,A2) aufweist, wobei wahlweise oder in Kombination für eine Vernetzungsreaktion vorgesehen ist
- eine der Düse (18) nachgeordneten Reaktionsvorrichtung (5), die mit einer gegenüber dem Ausgangsstoff (A) inerten Flüssigkeit gefüllt ist,
- ein in der Düse (70) angeordnetes Lichtleitelement (72) zum Einleiten von Laserlicht koaxial zur Düse (70).

## Claims

1. Method for producing an elastomer optical fibre from plastic, in which a fibre (16) is drawn from a viscous, reactive starting material (A) and the starting material (A) is cross-linked, by, optionally or in combination,
- the starting material (A) being added to a reaction device (5) via a nozzle (18), said reaction device (5) being filled with a liquid which is inert relative to the starting material (A) and in which at least a partial cross-linking of the starting material (A) occurs,
- the starting material (A) being shaped via the nozzle (70) and being cross-linked with the aid of laser light which is introduced into the starting material (A) in the nozzle (70) in the longitudinal direction,
wherein several reactive starting components (A1, A2) are mixed with one another in a dosing device (2) in a predetermined composition and are supplied to the nozzle (18, 70) as a starting material (A), and the reactive starting material (A) is cooled until it reaches the reaction device (5) or until it reaches the nozzle (70) in the case of the cross-linking with laser light.

2. Method according to claim 1,
**characterised in that** the starting material (A) is moved downwards in the reaction device by a drop height of a few metres due to its dead weight and is braked by the liquid.

3. Method according to claim 1 or 2,
**characterised in that** the liquid is temperature-controlled.

4. Method according to one of the preceding claims,
**characterised in that** the liquid is an oil having a lower density than the starting material (A).

5. Method according to one of the preceding claims,
**characterised in that** after a partial cross-linking, the fibre (16) is actively drawn to a desired end diameter.

6. Method according to one of the preceding claims,
**characterised in that** the fibre (16) is drawn in the end region of the reaction device (5) through an aperture (20) adapted to the fibre diameter.

7. Method according to claim 6,
**characterised in that** the aperture (20) is able to be dynamically adjusted.

8. Method according to claim 6 or 7,
**characterised in that** the aperture (20) is formed as an elastically deformable tube which is able to be loaded with pressure from the outside and abuts onto the fibre (16).

9. Method according to one of claims 6 to 8,
**characterised in that** a belt drawing device (22) is arranged after the aperture (20), in which the fibre (16) is gripped and drawn between two belts which rotate in opposite directions, having flat surfaces.

10. Method according to one of the preceding claims,
**characterised in that** the partially cross-linked fibre (16) is post cross-linked and cleaned subsequent to the reaction device (5) and for this purpose, optionally or in combination,
- is drawn through a heated bath (6) for further cross-linking
- is drawn through a heated cleaning device (8, 10) for cleaning,
- is rinsed in the cleaning device (8, 10) by continuous circulation of a rinsing fluid, in particular under the influence of ultrasound,
- is dried under vacuum and
- is stored for up to one complete cross-linking.

11. Method for producing an optical fibre from plastic according to one of the preceding claims,
**characterised in that** the starting material (A) is a reactive, spatially cross-linkable polyurethane system, in particular a 2-component system having a polyol as well as a polyisocyanate as a cross-linker, wherein the cross-linking occurs via a polyaddition reaction of the functional group (OH) of the polyol with the functional group (NCO) of the polyisocyanate and the molar ratio of the functional groups NCO : OH in particular ranges between 1.3 : 1 and 0.9 : 1 and is in particular 1.1 : 1.

12. Device for producing an optical fibre using a method according to one of the preceding claims, having a dosage device (2) comprising a nozzle (18, 70) for a viscous, reactive starting material (A), wherein the dosage device (2) is formed for mixing several reactive starting components (A1, A2) into the starting material (A) and has temperature devices (38) for cooling the reactive starting components (A1, A2), wherein, optionally or in combination, the following is provided for a cross-linking reaction:
- a reaction device (5) which is subordinate to the nozzle (18) and which is filled with a liquid which is inert relative to the starting material (A),
- an optical element (72) arranged in the nozzle (70) for introduction of laser light coaxially to the nozzle (70).

## Revendications

1. Procédé de fabrication d'une fibre optique élastomère en matière plastique, d'après lequel on obtient par étirage à partir d'un matériau de base (A) réactif, visqueux, une fibre (16), et le matériau de base (A) est réticulé, par le fait que, au choix ou en combinaison
- le matériau de base (A) est envoyé par l'intermédiaire d'une buse ou filière (18) dans un dispositif de réaction ou réacteur (5), qui est rempli d'un liquide inerte par rapport au matériau de base (A) et dans lequel s'effectue au moins une réticulation partielle du matériau de base (A),
- le matériau de base (A) est mis en forme par la buse (70) et est réticulé à l'aide de lumière laser, qui, dans la buse (70), est envoyée en direction longitudinale, dans le matériau de base (A),
procédé
d'après lequel plusieurs composants de base réactifs (A1, A2) sont mélangés ensemble dans un dispositif de dosage (2), selon une composition prescrite, et sont amenés à la buse (18, 70) en tant que matériau de base (A), et le matériau de base (A) réactif est refroidi jusqu'à ce qu'il arrive dans le dispositif de réaction (5), ou respectivement jusqu'à la buse (70) dans le cas d'une réticulation à l'aide de lumière laser.

2. Procédé selon la revendication 1,
**caractérisé**
**en ce que** le matériau de base (A) se déplace vers le bas dans le dispositif de réaction, sous l'effet de son propre poids, sur une hauteur de chute d'une longueur égale à peu de mètres, et est freiné par le liquide.

3. Procédé selon la revendication 1 ou la revendication 2,
**caractérisé**
**en ce que** le liquide est tempéré.

4. Procédé selon l'une des revendications précédentes,
**caractérisé**
**en ce que** le liquide est une huile d'une densité plus faible que le matériau de base (A).

5. Procédé selon l'une des revendications précédentes,
**caractérisé**
**en ce qu'**après une réticulation partielle, la fibre (16) est étirée de manière active à un diamètre final souhaité.

6. Procédé selon l'une des revendications précédentes,
**caractérisé**
**en ce que** dans la zone terminale du dispositif de réaction (5), la fibre (16) est tirée à travers un diaphragme (20) adapté au diamètre de la fibre.

7. Procédé selon la revendication 6,
**caractérisé**
**en ce que** le diaphragme (20) est réglable de manière dynamique.

8. Procédé selon la revendication 6 ou la revendication 7,
**caractérisé**
**en ce que** le diaphragme (20) est réalisé sous la forme d'un tuyau déformable de manière élastique, qui peut être soumis à la pression par l'extérieur et s'applique contre la fibre (16).

9. Procédé selon l'une des revendications 6 à 8,
**caractérisé**
**en ce qu'**après le diaphragme (20) est agencé un dispositif de traction à bandes (22) où la fibre (16) est saisie entre deux bandes à surface lisse tournant en sens opposés, et est tirée.

10. Procédé selon l'une des revendications précédentes,
**caractérisé**
**en ce que** la fibre (16) partiellement réticulée est, à la suite du dispositif de réaction (5), soumise à une post-réticulation et est nettoyée, et est à cet effet, au choix ou en combinaison,
- tirée à travers un bain chauffé (6) pour la poursuite de la réticulation,
- tirée à travers un dispositif de nettoyage (8, 10) chauffé, pour le nettoyage
- est rincée dans le dispositif de nettoyage (8, 10) par recirculation continue d'un liquide de rinçage, notamment sous l'effet d'ultrasons,
- est séchée sous dépression, ainsi que
- stockée jusqu'à la réticulation complète.

11. Procédé de fabrication d'une fibre optique en matière plastique, selon l'une des revendications précédentes,
**caractérisé**
**en ce que** le matériau de base (A) est un système de polyuréthanne réactif, pouvant subir une réticulation spatiale, notamment un système bi-composants avec un polyol ainsi qu'un polyisocyanate en tant qu'agent de réticulation, la réticulation s'effectuant par l'intermédiaire d'une réaction de polyaddition du groupe fonctionnel (OH) du polyol avec le groupe fonctionnel (NCO) du polyisocyanate, et le rapport molaire des groupes fonctionnels NCO : OH se situe plus particulièrement dans la plage entre 1,3 : 1 et 0,9 : 1 et notamment à une valeur de 1,1 : 1.

12. Installation pour la fabrication d'une fibre optique à l'aide d'un procédé selon l'une des revendications précédentes, comprenant un dispositif de dosage (2) comportant une buse ou filière (18, 70) pour un matériau de base (A) réactif, visqueux, le dispositif de dosage (2) étant conçu pour mélanger plusieurs composants de base (A1, A2) réactifs pour former le matériau de base (A), et présentant des dispositifs à tempérer (38) pour refroidir les composants de base réactifs (A1l, A2), installation dans laquelle il est prévu, au choix ou en combinaison, pour la réaction de réticulation,
- un dispositif de réaction ou réacteur (5), qui est agencé en aval de la buse (18) et est rempli d'un liquide inerte par rapport au matériau de base (A),
- un élément guide de lumière (72), qui est agencé dans la buse (70) et est destiné à introduire de la lumière laser coaxialement à la buse (70).
